# EUROPEAN PATENT SPECIFICATION

(11) **EP 2 242 570 B1**
(45) Date of publication and mention of the grant of the patent: **14.02.2018**
(21) Application number: 07866775.5
(22) Date of filing: 29.11.2007
(51) Int. Cl.: B01J 19/18, C10G 1/10, C08J 11/10, B01J 19/20, C10B 53/07, B01F 15/06

(54) **METHOD FOR THE THERMOCATALYTIC DEPOLYMERISATION OF PLASTIC MATERIAL**
VERFAHREN ZUR THERMOKATALYTISCHEN DEPOLYMERISATION VON KUNSTSTOFFMATERIAL
PROCÉDÉ DE DÉPOLYMÉRISATION THERMOCATALYTIQUE DE MATIÈRE PLASTIQUE

(43) Date of publication of application: 27.10.2010
(73) Proprietor: Energy & Ecology S.r.l., Niella Tanaro, (CN) (IT)
(72) Inventor: COLOMBO, Corrado, I-12080 San Michele Mondovi' (IT); COLOMBO, Gianpiero, I-12084 Mondovi' (IT); QUATTRINI, Paolo, I-41028 Serramazzoni (IT)
(74) Representative: Mangini, Simone
(86) International application number: PCT/IT2007/000832
(87) International publication number: WO 2009/069161

(56) References cited:
- EP-A- 0 702 076
- EP-A- 1 946 829
- EP-B- 1 212 387
- WO-A-2005/087897
- FR-A- 2 775 621
- FR-A- 2 841 154
- GB-A- 1 547 962
- US-A- 4 584 421
- US-A- 5 055 273

## Description

### TECHNICAL FIELD

The present invention relates to a method for the thermocatalytic depolymerisation of plastic material.

### BACKGROUND ART

The known methods for the depolymerisation of plastic material are relatively complex, do not offer a high production rate and cause release into the atmosphere of gaseous substances with a high environmental impact (greenhouse gases).

The patent EP1212387B1 describes thermocatalytic depolymerisation of plastic material; during depolymerisation a heating device supplies heat to the plastic material and the plastic material is depolymerised so as to obtain relatively low-boiling compounds. The heating device comprises a combustion chamber inside which part of the compounds in gaseous form obtained from the depolymerisation are burnt. Combustion gases produced inside the combustion chamber and part of the relatively low-boiling compounds are released into the atmosphere passing through an outlet duct. The combustion gases and the relatively low-boiling compounds are potentially harmful for the environment.

WO2005/087897 describes thermocatalytic depolymerisation of plastic material inside a reactor; during depolymerisation, a heating device supplies heat to the plastic material and the plastic material is depolymerised so as to obtain compounds in a gaseous form. The heating device supplies heat only to the outside of the reactor, which has a low production rate.

### DISCLOSURE OF INVENTION

It is an object of the present invention to provide a method for the thermocatalytic depolymerisation of plastic material which overcomes, at least partially, the drawbacks of the known art and is at the same time easy and inexpensive to implement.

The present invention provides a method for thermocatalytic depolymerisation of plastic material according to the following independent claims and, preferably, any one of the claims depending directly or indirectly on the independent claims.

Unless otherwise specified, in the present text the following terms have the meaning indicated below.

Plastic material indicates a polymeric material, advantageously a waste polymeric material (refuse), in particular material comprising, preferably consisting mainly of, polyolefins.

The expression plastic material consisting mainly of polyolefins indicates a plastic material, the polyolefin content of which is at least 80% in weight (with respect to the overall weight of the plastic material), advantageously at least 90% in weight.

The expression relatively low-boiling compounds indicates compounds that break free (i.e. they separate from the plastic material) during the at least partial, advantageously complete, depolymerisation of at least part of the plastic material. The relatively low-boiling compounds have boiling temperatures lower than the boiling temperature of the plastic material.

The expression substantially non-condensable gases indicates substances, the boiling temperature of which is below 25°C, advantageously below 10°C, in particular propane and/or butane.

Electrical resistance indicates a heating element that releases heat by electrical dissipation.

### BRIEF DESCRIPTION OF THE DRAWINGS

The invention is described below with reference to the accompanying drawings, which illustrate some examples of non-limiting embodiments, in which:
- figure 1 schematically illustrates a plant suitable for implementing a method in accordance with the present invention;
- figure 2 schematically illustrates, on an enlarged scale and partially in section, a portion of the plant of figure 1;
- figures 3-8 are perspective views of embodiments of a detail of figure 2;
- figures 9 and 10 are top schematic views of embodiments of the detail of figures 3-8;
- figure 11 illustrates a detail of figure 10 on an enlarged scale;
- figures 12 and 13 are schematic lateral views of alternative embodiments of a detail of figure 2;
- figures 14 and 15 are top schematic views of the details of figures 12 and 13 respectively; and
- figures 16-25 are perspective schematic views of embodiments of details of figure 2.

### BEST MODE FOR CARRYING OUT THE INVENTION

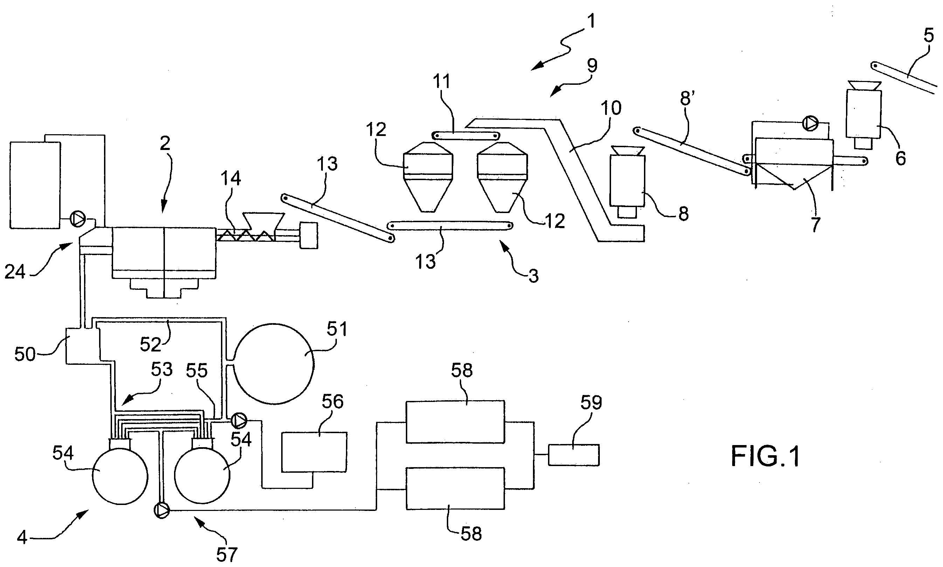

With reference to figure 1, 1 indicates as a whole a plant for the thermocatalytic depolymerisation of plastic material.

The plant 1 comprises a reactor 2, for at least partially depolymerising of the plastic material so as to obtain relatively low-boiling compounds; a feed assembly 3 for feeding the plastic material to the reactor 2; an outlet assembly 4 for collecting and treating the relatively low-boiling compounds.

The feed assembly 3 includes a conveyor belt 5 for feeding the plastic material to a grinding mill 6; a washing unit 7 for washing the plastic material; and a centrifuge 8 which is suitable for receiving the plastic material from a conveyor belt 8' positioned downstream of the washing unit 7 and for drying the plastic material.

A filling device 9, comprising a screw conveyor 10 and a conveyor belt 11, is designed for filling two storage silos 12 with the plastic material coming from the centrifuge 8.

The feed assembly 3 comprises, furthermore, a pair of conveyor belts 13 for feeding a converter device 14 for melting the plastic material and feeding the plastic material to the reactor 2.

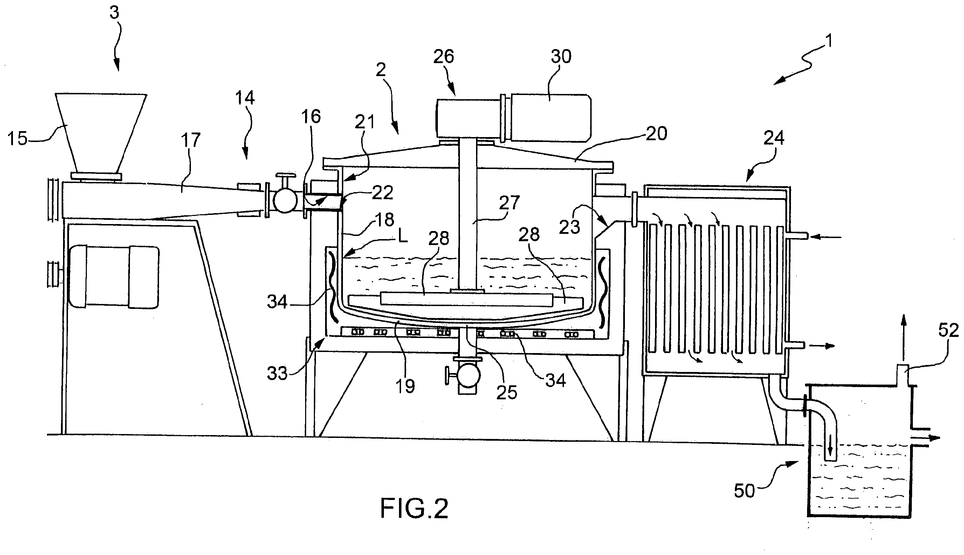

The device 14 (figure 2) comprises a loading hopper 15, an outlet 16 and a duct 17, which has an internal section that tapers from the loading hopper 15 to the outlet 16.

A screw (known per se and not shown) (according to alternative embodiments, a plurality of screws) extends longitudinally inside the duct 17 and is suitable, rotating around its own longitudinal axis, for pushing the plastic material through the outlet 16. In use, while the plastic material is pushed towards the outlet 16, said plastic material acquires heat and becomes a dense liquid.

According to some embodiments, the liquefaction of the plastic material is promoted or produced by electrical resistances and/or other external heat sources.

According to further embodiments, the device 14 comprises an auger or a screw.

The reactor 2 comprises a lateral wall 18, a base wall 19 substantially transverse to the lateral wall 18 (in particular substantially horizontal), and an upper wall 20 (in particular a cover) substantially transverse to the lateral wall 18 (in particular substantially horizontal). The walls 18, 19 and 20 delimit at least partially a reaction chamber 21.

In use, according to different embodiments, at least one catalyst is placed inside the reaction chamber 21 before, simultaneously with and/or after conveying of the plastic material into said reaction chamber 21.

The catalyst is chosen in order to favour the depolymerisation reaction. Non-limiting examples of catalysts that can be used for this purpose are given in US4584421, the content of which is herein incorporated in its entirety for the sake of completeness of description.

The wall 18 comprises an inlet aperture 22 through which, during use, the plastic material coming from the outlet 16 is conveyed to enter the reaction chamber 21, and an outlet aperture 23 through which, during use, the relatively low-boiling compounds leave the reaction chamber 21 and reach a condenser 24.

The condenser 24 has a cooling jacket inside which a coolant runs (in particular water). During use, the internal temperature of the condenser 24 is markedly lower than the internal temperature of the reaction chamber 21. The relatively low-boiling compounds present inside the condenser 24 condense at least partially.

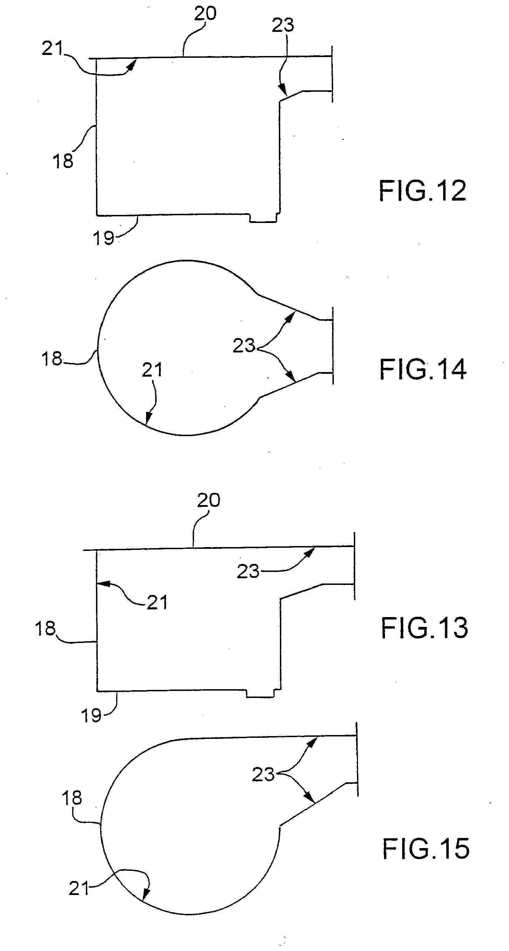

The aperture 23 is shaped so as to facilitate outflow of the relatively low-boiling compounds. In particular, referring to figures 12-15, the aperture 23 is funnel-shaped.

According to not shown embodiments, in order to further facilitate outflow of the relatively low-boiling compounds via the aperture 23, the reactor 2 comprises pumps and/or fans arranged inside the reaction chamber 21 at the level of the aperture 23 itself.

The reaction chamber 21 has a substantially circular horizontal section and a height equal to or greater than a diameter of the base wall 19.

According to some embodiments not shown, the reaction chamber 21 has a substantially ellipsoidal, square or rectangular horizontal section.

In the embodiment shown in figure 2, the wall 18 is substantially vertical. Nevertheless, according to further embodiments, the wall 18 can be slanted; consequently the horizontal section of the reaction chamber 21 can vary in shape and dimension, moving vertically.

During use, by means of level indicators (known per se and not shown) and by adjusting operation of the converter device 14, the plastic material is kept inside the reaction chamber 21 below a set level L. Advantageously, the distance between the level L and the outlet aperture 23 is approximately 1/3 to approximately 1/4 of the height of the reaction chamber 21.

The base wall 19 has a slight concavity facing towards the inside of the reaction chamber 21 and a drain hole 25 to discharge the content of the reaction chamber 21 in order to proceed with washing of the reaction chamber 21 itself.

The reactor 2 furthermore includes a mixer 26, which is suitable for mixing the plastic material and the catalyst and, in turn, comprises a shaft 27 and one or more mixing elements 28 connected integrally to the shaft 27. The shaft 27 is suitable for rotating around its own longitudinal axis 29 which, advantageously, extends in a substantially vertical direction. The shaft 27 is driven, during use, by a motor 30 (brushless) positioned on the upper wall 20.

Advantageously, the mixing element 28 is so shaped that, during depolymerisation, the plastic material is lifted upwards and then drops back down again.

Advantageously, the mixing element 28 is shaped so that, during depolymerisation, it pushes at least part of the plastic material away from said longitudinal axis 29.

Advantageously, the mixing element 28 is shaped so that, during depolymerisation, it pushes at least part of the plastic material towards said longitudinal axis 29.

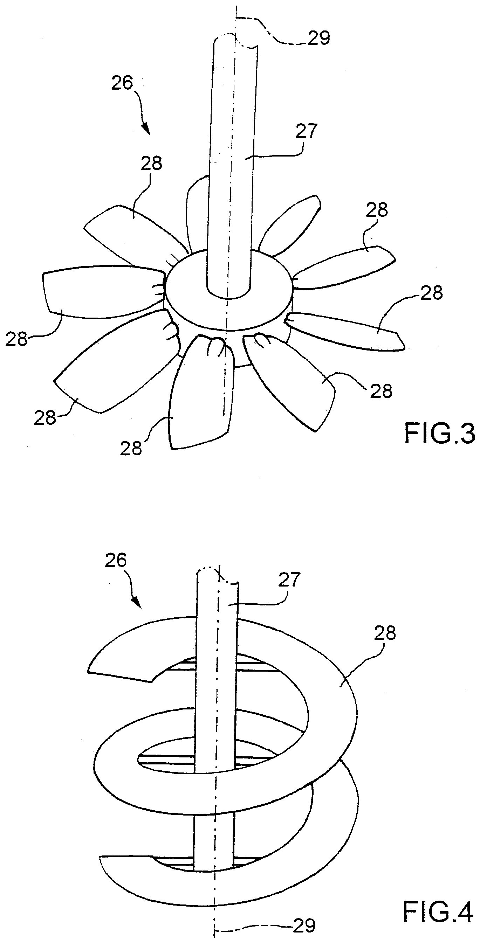

According to the embodiment shown in figure 3, the mixing elements 28 comprise, in particular are, a plurality of slanting blades.

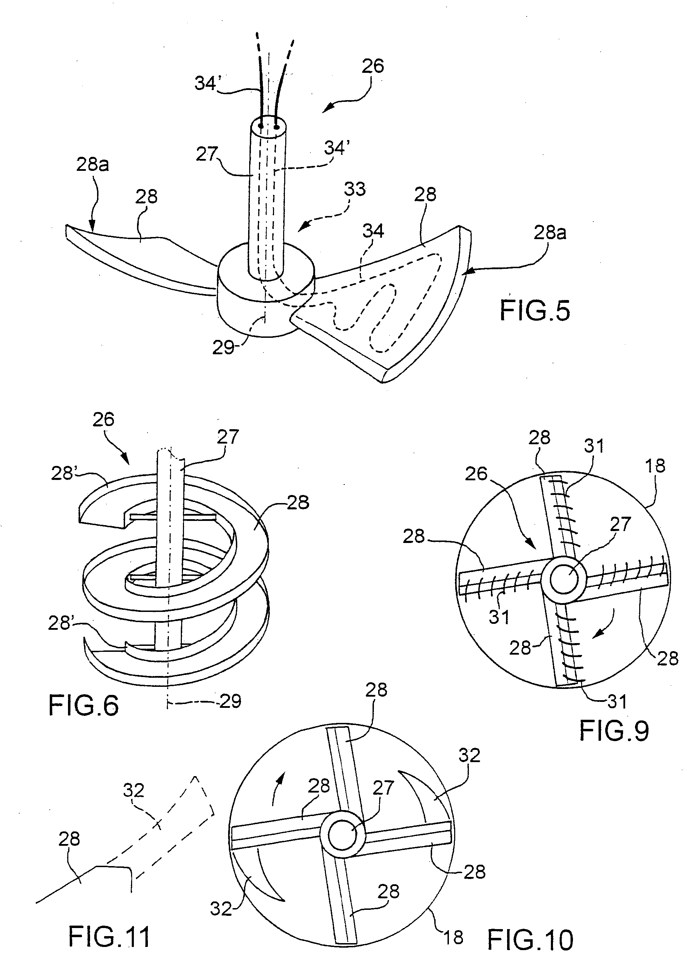

According to the embodiment shown in figure 5, the mixing elements 28 comprise, in particular are, a plurality of (in particular two) slanting blades. In this case, the inclination of the blades is lesser at the level of the shaft 27 and greater at an end 28a opposite to the shaft 27. The mixing elements 28 are shaped so that the plastic material is lifted upwards when positioned at the level of the lateral wall 18 and drops back down again once it is positioned at the level of the shaft 27.

According to the embodiment shown in figure 4, the mixing element 28 has a helical shape.

According to the embodiment shown in figure 6, the mixing element 28 has a helical shape. In this case, the mixing element 28 has, at its lateral ends, substantially vertical walls 28'.

According to the embodiment shown in figure 9, the mixing elements 28 comprise a plurality of slanting blades and tabs 31, which project substantially vertically from the blades. The tabs 31 are shaped so as to push at least part of the plastic material away from said axis 29.

According to the embodiment shown in figures 10 and 11, the mixing elements 28 comprise a plurality of slanting blades and protrusions 32. The protrusions 32 are shaped so as to push at least part of the plastic material towards the axis 29.

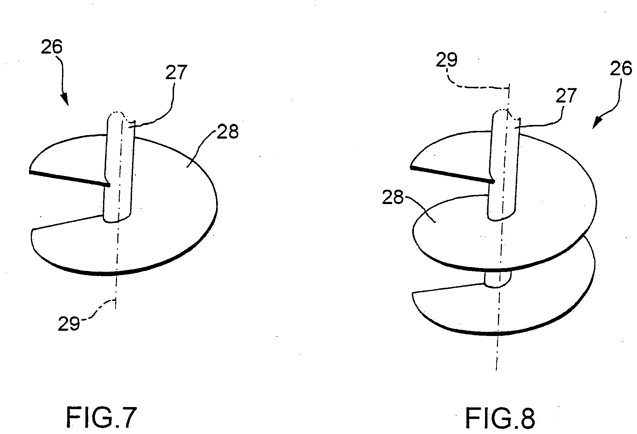

According to the embodiment shown in figure 7, the mixing element 28 comprises, in particular is, a simple auger.

According to the embodiment shown in figure 8, the mixing element 28 comprises, in particular is, a multi-turn auger.

The mixing elements 28 of the embodiments shown in figures 4 and 6-8 are shaped so as to push the plastic material upwards; the latter tends to drop back down in the areas of the reaction chamber 21 where the mixing elements 28 are not present.

The reactor 2 furthermore includes a heating device 33 to supply heat to the plastic material during depolymerisation by means of electricity.

It should be noted that heating of the plastic material by means of electricity and not using the combustion of hydrocarbons in furnaces (as described in the known art) permits significant reduction in the emission of gases that are harmful to the environment.

It is important to point out that the reaction chamber 21 is substantially isolated from the external environment. In other words, the reaction chamber 21 is provided only with the inlet and outlet apertures 22 and 23 which connect the reaction chamber 21 itself only to the feed unit 3 and the outlet unit 4. Due to the fact that the reaction chamber 21 is substantially isolated from the external environment, the relatively low-boiling compounds released during the depolymerisation are not emitted directly into the environment.

The heating device 33 comprises at least one heating element 34; advantageously, the heating element 34 comprises, in particular consists of, an electrical resistance.

According to the embodiment shown in figure 2, the heating element 34 is positioned around the reaction chamber 21, advantageously substantially in contact with the lateral and base walls 18 and/or 19.

According to advantageous embodiments, the heating element 34 is positioned inside the reaction chamber 21.

With particular reference to the embodiment shown in figure 5, the heating element 34 (an electrical resistance) is combined with the mixer 26, in particular it is positioned inside one of the mixing elements 28.

In this case, the heating element 34 is powered by an electrical current passing through wires 34', which extend inside the shaft 27.

According to some embodiments, the heating element 34 is positioned on an external surface of the mixing element 28. Advantageously, the heating device 33 comprises a plurality of heating elements 34, each of which is combined with a relative mixing element 28.

According to embodiments not shown, the heating element 34 comprises a microwave resonator and/or an induction heater.

Experimentally it has been observed that by positioning the heating element 34 inside the reaction chamber 21, and in particular when the heating element 34 is mobile, the production rate of the plant 1 increases very significantly. The fact that the mobility of the heating element 34 inside the reaction chamber is particularly advantageous in terms of production rate is probably due to a greater transmission of heat to a greater quantity of plastic material.

It should be noted that the use of electricity to power the heating element 34 is advantageous also because it facilitates selection of the point or points in which the heat is transferred to the material. In particular, the electrical power supply makes it relatively easy both to position and maintain movement of the heating element 34 inside the reaction chamber 21.

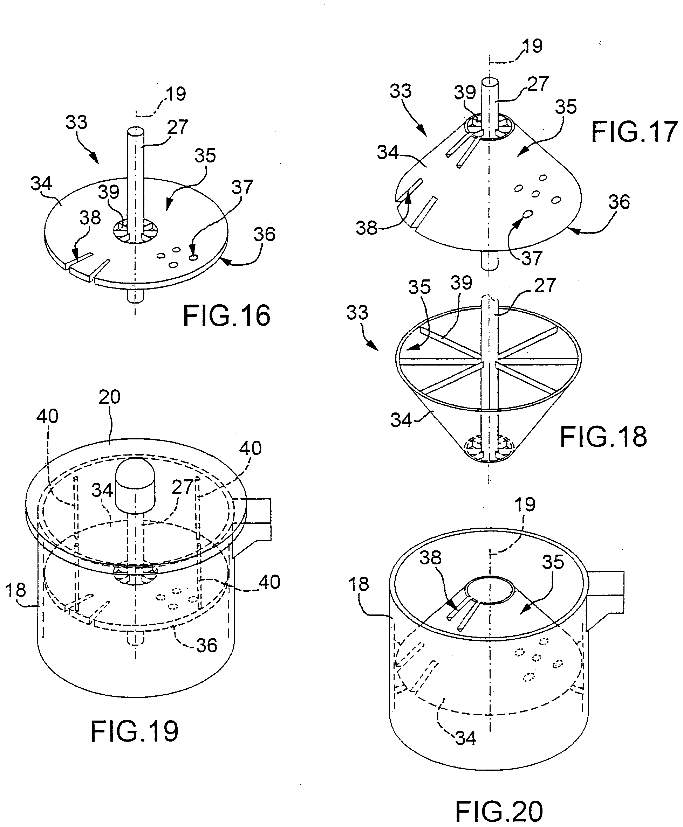

Referring in particular to the embodiments of figures 16-23, the heating element 34 has a heating surface 35 delimited by a peripheral edge 36.

Advantageously, the peripheral edge 36 extends along the lateral wall 18, in particular substantially in contact. In other words, the surface 35 is delimited by the lateral wall 18.

According to the embodiments shown in figures 16-20, the surface 35 has a plurality of holes 37 and/or slits 38 through which, during use, the plastic material and/or the relatively low-boiling compounds pass.

The particular shape of the surface 35, also where not heated, limits expansion of the plastic material, reducing the production of foam and, therefore, limiting the risk of plastic material obstructing the outlet aperture 23 and/or reaching the condenser 24.

For this purpose, according to some advantageous variations, the surface 35 is positioned immediately above and/or immediately below the level L.

According to the embodiment shown in figure 16, the surface 35 is substantially flat and extends crosswise to the axis 29 in a substantially horizontal manner. The heating element 34 is connected integrally to the shaft 27 by means of spokes 39; in this way, in use, the heating element 34 rotates about axis 29.

According to the embodiments shown in figures 17 and 18, the surface 35 has a substantially truncated cone shape with the vertex facing upwards (figure 17) or downwards (figure 18). The heating element 34 is connected integrally to the shaft 27 by means of the spokes 39; in this way, during use, the heating element 34 rotates around axis 29.

The embodiment shown in figure 19 is substantially identical to the embodiment shown in figure 16 and differs from the latter only due to the fact that the heating element 34 is integrally connected by means of arms 40 to the upper wall 20 and not to the shaft 27; in this way, during use, the heating element 34 does not rotate around axis 29.

The embodiment shown in figure 20 is substantially identical to the embodiment shown in figure 17 and differs from the latter only due to the fact that the heating element 34 is connected integrally by means of pins 41 to the lateral wall 18 and not to the shaft 27; in this way, during use, the heating element 34 does not rotate around axis 29.

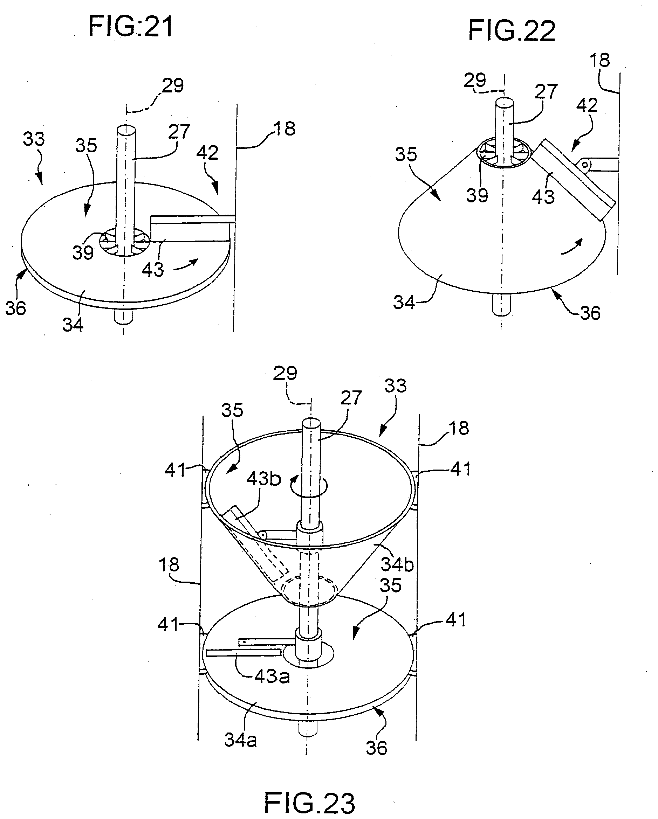

According to the embodiments shown in figures 21-23, the reactor 2 furthermore comprises a cleaning device 42 to keep the surfaces 35 clean.

Advantageously, the cleaning device 42 comprises at least one scraper 43, which is designed for coming substantially into contact with the respective surface 35. During use, the scraper 43 and the surface 35 are moved with respect to each other so that the scraper 43 slides on the surface 35.

In the embodiment shown in figure 21, the surface 35 is substantially flat and extends crosswise to the axis 29 in a substantially horizontal manner. The scraper 43 is integrally connected to the lateral wall 18 and is positioned in a substantially horizontal direction. The heating element 34 is integrally connected to the shaft 27 by means of the spokes 39; in this way, in use, the heating element 34 rotates around axis 29 and the surface 35 moves with respect to the scraper 43.

In the embodiment shown in figure 22, the surface 35 has a substantially truncated cone shape with the vertex facing upwards. The scraper 43 is integrally connected to the lateral wall 18 and is positioned in an oblique direction. The heating element 34 is integrally connected to the shaft 27 by means of the spokes 39; in this way, in use, the heating element 34 rotates around the axis 29 and the surface 35 moves with respect to the scraper 43.

According to the embodiment shown in figure 23, the heating device 33 comprises two heating elements 34a and 34b. The heating element 34a has a substantially flat horizontal surface 35; the heating element 34b has a substantially truncated cone-shaped surface with the vertex facing downwards. The heating elements 34a and 34b are integrally connected to the lateral wall 18. In this case, the cleaning device 42 comprises two scrapers 43a and 43b, which are integrally connected to the shaft 27 so that, during use, each one moves with respect to the relative heating element 34a and 34b.

According to variations not shown, in the embodiments of figures 21-23, the surfaces 35 are provided with holes and/or slits as shown in figures 16-20.

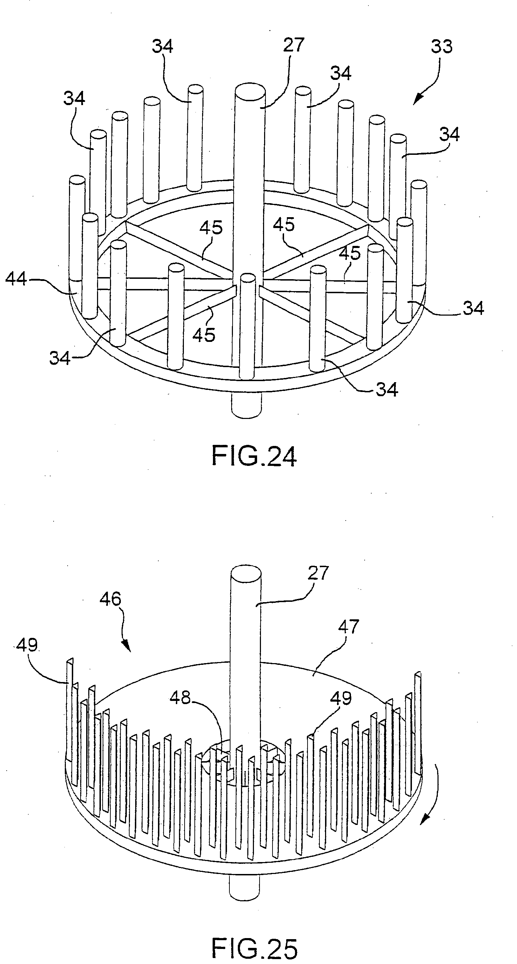

With reference to figure 24, according to advantageous embodiments, the heating device 33 comprises a plurality of heating elements 34 arranged on a substantially circular frame 44 connected to the shaft 27 by means of spokes 45. The heating elements 34 have a substantially cylindrical shape with constant circular cross section. According to variations not shown, the heating elements 34 have a polygonal (in particular square) cross section.

Advantageously the frame 44 is positioned above the level L so that the heating elements 34 supply heat to the relatively low-boiling compounds present in this portion of the reaction chamber 21. According to some variations, the heating elements 34 are fixed to the upper wall 20.

The embodiments shown in figures 16-24 and their variations should be considered alternatives to one another or combined.

In particular, according to advantageous embodiments, the heating device 33 comprises a heating element 34 (for example as shown in figure 5) positioned below the level L and a heating element 34 (for example as shown in figure 24) positioned above the level L. The heating element 34 positioned below the level L facilitates depolymerisation of the plastic material; the heating element 34 positioned above the level L facilitates outflow of the substantially low-boiling compounds via the aperture 23.

The reactor 2 furthermore comprises a foam-reducing device 46 (figure 25); the device 46 is suitable for limiting the risk of the plastic material obstructing the outlet aperture 23 and/or reaching the condenser 24.

Device 46 (advantageously positioned below the level L) comprises a wheel 47 integrally connected to the shaft 27 by means of spokes 48, and a plurality of elements 49 for cavitation (in figure 25 only some elements 49 are shown). Each element 49 has a substantially vertical longitudinal extension and a V-shaped cross section. During use, due to rotation of the shaft 27 around its axis 29, each element 49 is moved crosswise, in particular substantially horizontally. In this way cavitation is obtained at the rear of each element 49 which favours aggregation and elimination of the relatively low-boiling compounds. Advantageously, the cross section vertex of the element 49 is in an anterior position with respect to the direction of forward movement.

The outlet unit 4 comprises an intermediate tank 50 positioned downstream of the condenser 24 to collect the relatively low-boiling compounds coming from the condenser 24 itself.

During use, inside the tank 50, substantially non-condensable gases separate from the relatively low-boiling compounds and reach a tank 51, passing through a duct 52.

The relatively low-boiling compounds are conveyed by a system of ducts 53 to two tanks 54, at the level of which further substantially non-condensable gases can be released.

The substantially non-condensable compounds present inside the tank 50 or coming from the tanks 54 through a duct 55 are fed to a electricity-generating assembly 56 comprising a four-stroke Otto-cycle engine which burns the substantially non-condensable gases; the engine has a high operating temperature, in particular above 1500°C. The electricity produced by the electricity-generating assembly 56 is usually used by the plant 1.
The relatively low-boiling compounds present in the tanks 54 are fed through a system of ducts 57 to two electricity-generating assemblies 58, each of which comprises a respective diesel engine and is designed for producing electricity by combusting the relatively low-boiling compounds.
The electricity-generating assemblies 58 are connected to electricity grid 59 so as to feed the excess energy produced with respect to consumption of the plant 1 into said electricity grid 59.
It is important to point out that part of the energy produced by the generating sets 56 and 58 of the plant 1 is used to power the heating device 33.
In view of the particular operating parameters of the Otto-cycle engine and the diesel engine, the emission of combustion gases that are potentially harmful for the environment is drastically reduced with respect to the systems described in the state of the art. In particular, an emission of NOₓ below 250mg/Nmc at 5% of O₂ and an emission of CO below 3250mg/Nmc at 5% of O₂ are obtained.
According to some embodiments, the reactor 2 comprises a lateral wall 18, a bottom wall 19 and an upper wall 20; a reaction chamber 21, inside which at least part of the plastic material is at least partially depolymerised and which is delimited at least partially by the lateral, bottom and upper walls 18, 19, 20; the surface 35 for limiting expansion of the material is delimited by the lateral wall 18.
According to some embodiments, the reactor includes a mixer 26, which in turn comprises a shaft 27 rotating about its own longitudinal axis 29 and at least one mixing element 28 connected integral with the shaft 27.

According to some embodiments, the mixing element 28 is shaped so that, during the depolymerisation step, the plastic material is lifted upwards and then drops back down again. According to some embodiments, the mixing element 28 comprises a blade.
According to some embodiments, the mixing element 28 has a substantially helical shape.
According to some embodiments, the mixing element 28 is shaped so that, during the depolymerisation step, it pushes at least part of the plastic material away from said longitudinal axis 29.
According to some embodiments, the mixing element 28 is shaped so that, during the depolymerisation step, it pushes at least part of the plastic material towards said longitudinal axis 29.
According to some embodiments, the first heating element 34 is supported by the mixing element 28.
According to some embodiments, the reaction chamber 21 has an aperture 23 shaped so as to facilitate outflow of the relatively low-boiling compounds; in particular, the aperture 23 is funnel-shaped.
According to an aspect of the present invention, it is provided a method for the thermocatalytic depolymerisation of plastic material; the method comprises:
a step in which the plastic material and a catalyst for the depolymerisation are placed in a reactor 2, which comprises at least one heating device 33;
a depolymerisation step, during which the heating device 33 supplies heat to the plastic material and at least part of the plastic material is at least partially depolymerised so as to obtain relatively low-boiling compounds; and
an outlet step, during which at least part of the relatively low-boiling compounds leave the reactor 2;
the reactor 2 comprises at least one external wall 18; 19; 20 and a reaction chamber 21, which is at least partially delimited by the external wall 18; 19; 20 and inside which, during the depolymerisation step, the plastic material and the catalyst are placed;
the heating device 33 comprises at least one first heating element 34; 34a positioned inside the reaction chamber 21; during the depolymerisation step, the heating element 33 heats the plastic material by means of electricity.
Advantageously the method comprises on or more of the features disclosed above and/or one or more of the features directly recited in of claims 2 to 15.
According to a specific aspect of the invention it is provided a method for the thermocatalytic depolymerisation of plastic material; the method comprising:
a step, during which the plastic material and a catalyst for the depolymerisation are placed in a reactor 2, which comprises at least one heating device 33;
a depolymerisation step, during which the heating device 33 supplies heat to the plastic material and at least part of the plastic material is at least partially depolymerised so as to obtain relatively low-boiling compounds; and
an outlet step, during which at least part of the relatively low-boiling compounds leave the reactor 2;
the reactor 2 comprises at least one external wall 18; 19; 20) and a reaction chamber 21, which is at least partially delimited by the external wall 18; 19; 20 and inside which, during the depolymerisation step, the plastic material and the catalyst are placed;
the heating device 33 comprises at least one first heating element 34; 34a positioned inside the reaction chamber 21; during the depolymerisation step, the first heating element 34; 34a is kept in movement so as to modify its position inside the reaction chamber 21.
Advantageously the method comprises on or more of the features disclosed above and/or one or more of the features directly recited in of claims 2 to 15.
Further characteristics of the present invention will become evident from the following description of a merely illustrative and non-limiting example.

### Example 1

The production rate of a method in which the reactor 2 is heated externally was compared with the production rate of a method in which the same reactor 2 was heated internally.
The test was conducted by placing inside the reactor 2 (capacity 40 litres) 30 litres of plastic with the catalyst. The reactor had two internal heating elements 34, one fixed and one moving combined with a mixing element 28; each heating element 34 was provided with an electrical resistance.
The test was conducted maintaining the working conditions equal in both cases.
In the first case the internal heating elements 34 were kept switched off, bringing the plastic to a temperature of 420°C by means of the external heating; an hourly production rate of approximately 2 litres of paraffinic product was achieved.
In the second case, the internal heating elements 34 were switched on, recording an increase in the production of paraffinic product of 45%.

## Claims

1. A method for the thermocatalytic depolymerisation of plastic material; the method comprising:
a step, during which the plastic material and a catalyst for the depolymerisation are placed in a reactor (2), which comprises at least one heating device (33);
a depolymerisation step, during which the heating device (33) supplies heat to the plastic material and at least part of the plastic material is at least partially depolymerised so as to obtain relatively low-boiling compounds; and
an outlet step, during which at least part of the relatively low-boiling compounds leave the reactor (2);
the reactor (2) comprises at least one external wall (18; 19; 20) and a reaction chamber (21), which is at least partially delimited by the external wall (18; 19; 20) and inside which, during the depolymerisation step, the plastic material and the catalyst are placed;
the method being **characterised in that** the heating device (33) comprises at least one first heating element (34; 34a) positioned inside the reaction chamber (21); during the depolymerisation step, the first heating element (34; 34a) is kept in movement so as to modify its position inside the reaction chamber (21); the method further comprising an electricity production step, which is subsequent to the outlet step and during which at least part of the relatively low-boiling compounds that have come out of the reactor (2) are combusted for the production of electricity; the electricity produced is at least partially used by the heating device (33) to heat the plastic material.

2. The method as claimed in claim 1, and comprising a step of separation, during which substantially non-condensable gases are separated from the substantially low-boiling compounds; during the electricity production step, the substantially non-condensable gases are at least partially combusted.

3. The method as claimed in claim 2 wherein, during the electricity production step, an Otto-cycle engine burns the substantially non-condensable gases.

4. The method according to one of the foregoing claims, wherein, during the electricity production step, a diesel engine burns the relatively low-boiling compounds.

5. The method as claimed in one of the preceding claims wherein, during the depolymerisation step, the plastic material is kept below a set level (L), the first heating element (34; 34a) being positioned below the set level (L); the heating device (33) comprises at least one second heating element (34; 34b) positioned above the set level (L) so as to heat the relatively low-boiling compounds positioned above the set level (L).

6. The method as claimed in claim 5, wherein the second heating element (34; 34b) has a second heating surface (35); the reactor (2) includes a cleaning device (42) which, in turn, includes a second scraper (43) which couples with the second heating surface (35); during the depolymerisation step the second heating surface (35) and the second scraper (43) are moved with respect to each other.

7. The method as claimed in one of the preceding claims, wherein the first heating element (34; 34a) has a first heating surface (35); the reactor (2) includes a cleaning device (42) which, in turn, includes a first scraper (43) which couples with the first heating surface (35); during the depolymerisation step the first heating surface (35) and the first scraper (43) are moved with respect to each other.

8. The method as claimed in claim 7, wherein the reactor (2) comprises a rotating shaft (27) which is connected to the first scraper (43) or to the first heating surface (35) and rotates the first scraper (43) or the first heating surface (35) around its own longitudinal axis (29).

9. The method as claimed in one of the preceding claims, and comprising a foam-reducing device (46); said foam-reducing device (46) comprises at least one element (49) for cavitation, which is moved inside the plastic material so as to obtain cavitation favouring aggregation and elimination of the relatively low-boiling compounds.

10. The method as claimed in claim 9, wherein the element (49) for cavitation has a substantially vertical longitudinal extension and is moved crosswise, in particular substantially horizontally.

11. The method as claimed in claim 9 or 10, wherein the element (49) for cavitation has a V-shaped cross section.

12. The method as claimed in one of the preceding claims, and comprising a foam-reducing device; the foam-reducing device comprises a surface (35) for limiting expansion of the material, which has at least one aperture (37; 38) through which the relatively low-boiling compounds pass.

13. The method as claimed in one of the foregoing claims, wherein the heating device (33) comprises at least one electrical resistance (34).

14. The method as claimed in one of the preceding claims, wherein the reactor (2) comprises a mixer (26) which, during the depolymerisation step, keeps the plastic material under agitation; the first heating element (34; 34a) is combined with the mixer (26).

15. The method as claimed in one of the preceding claims, wherein the heating device (33) comprises at least one second heating element (34; 34b), the second element being fixed.

## Patentansprüche

1. Verfahren zur thermokatalytischen Depolymerisation von Kunststoffmaterial, wobei das Verfahren aufweist:
einen Schritt, in dem das Kunststoffmaterial und ein Katalysator zur Depolymerisation in einen Reaktor (2), der zumindest eine Heizeinrichtung (33) aufweist, eingebracht werden;
einen Depolymerisationsschritt, in dem die Heizeinrichtung (33) dem Kunststoffmaterial Wärme zuführt und wobei zumindest ein Teil des Kunststoffmaterials zumindest teilweise depolymerisiert wird, um vergleichsweise niedrigsiedende Stoffe zu erhalten; und
einen Auslassschritt, in dem zumindest ein Teil der vergleichsweise niedrigsiedenden Stoffe den Reaktor (2) verlassen; wobei
der Reaktor (2) zumindest eine Außenwand (18; 19; 20) und ein Reaktionskammer (21) aufweist, die zumindest teilweise von der Außenwand (18; 19; 20) begrenzt wird und in der sich während des Depolymerisationsschritts das Kunststoffmaterial und der Katalysator befinden; und
das Verfahren **dadurch gekennzeichnet ist, dass** die Heizeinrichtung (33) zumindest ein erstes Heizelement (34; 34a), angeordnet in der Reaktionskammer (21), aufweist; das erste Heizelement (34, 34a) während des Depolymerisationsschritts in Bewegung gehalten wird, um dessen Position in der Reaktionskammer (21) zu verändern; das Verfahren ferner einen Elektrizitätserzeugungsschritt aufweist, der dem Auslassschritt nachfolgt und in dem zumindest ein Teil der vergleichsweise niedrigsiedenden Stoffe, die den Reaktor (2) verlassen haben, für die Erzeugung von Elektrizität verbrannt werden; und die erzeugte Elektrizität zumindest teilweise von der Heizeinrichtung (33) zum Erwärmen des Kunststoffmaterials verwendet wird.

2. Verfahren nach Anspruch 1, das einen Trennungsschritt aufweist, in dem im Wesentlichen nicht kondensierbare Gase von den im Wesentlichen niedrigsiedenden Stoffen getrennt werden, wobei während des Elektrizitätserzeugungsschritts die im Wesentlichen nicht kondensierbaren Gase zumindest teilweise verbrannt werden.

3. Verfahren nach Anspruch 2, bei dem während des Elektrizitätserzeugungsschritts ein Ottomotor die im Wesentlichen nicht kondensierbaren Gase verbrennt.

4. Verfahren nach einem der vorigen Ansprüche, bei dem während des Elektrizitätserzeugungsschritts ein Dieselmotor die vergleichsweise niedrigsiedenden Stoffe verbrennt.

5. Verfahren nach einem der vorigen Ansprüche, bei dem während des Depolymerisationsschritts das Kunststoffmaterial unterhalb eines bestimmten Niveaus (L) gehalten wird, das erste Heizelement (34; 34a) unterhalb des bestimmten Niveaus (L) positioniert wird; wobei die Heizeinrichtung (33) zumindest ein zweites Heizelement (34; 34b) aufweist, das oberhalb des bestimmten Niveaus (L) positioniert wird, um die vergleichsweise niedrigsiedenden Stoffe, positioniert oberhalb des bestimmten Niveaus (L), zu erhitzen.

6. Verfahren nach Anspruch 5, bei dem das zweite Heizelement (34; 34b) eine zweite Heizfläche (35) aufweist; der Reaktor (2) eine Reinigungseinrichtung (42) aufweist, die wiederum einen zweiten Schaber (43) aufweist, der mit der zweiten Heizfläche (35) gekoppelt ist; wobei während des Depolymerisationsschritts die zweite Heizfläche (35) und der zweite Schaber (43) relativ zueinander bewegt werden.

7. Verfahren nach einem der vorigen Ansprüche, bei dem das erste Heizelement (34; 34a) eine erste Heizfläche (35) aufweist; der Reaktor (2) eine Reinigungseinrichtung (42) aufweist, die wiederum einen ersten Schaber (43) aufweist, der mit der ersten Heizfläche (35) gekoppelt ist; wobei während des Depolymerisationsschritts die erste Heizfläche (35) und der erste Schaber (43) relativ zueinander bewegt werden.

8. Verfahren nach Anspruch 7, bei dem der Reaktor (2) eine Drehwelle (27) aufweist, die mit dem ersten Schaber (43) oder der ersten Heizfläche (35) verbunden ist und den ersten Schaber (43) oder die erste Heizfläche (35) um die eigene Längsachse (29) dreht.

9. Verfahren nach einem der vorigen Ansprüche, bei dem eine Schaumreduktionseinrichtung (46) vorgesehen ist; und die Schaumreduktionseinrichtung (46) zumindest ein Element (49) zur Kavitation aufweist, das in dem Kunststoffmaterial bewegt wird, um Kavitation zu erhalten, welche Aggregation und Elimination der vergleichsweise niedrigsiedenden Komponenten begünstigt.

10. Verfahren nach Anspruch 9, bei dem das Element (49) zur Kavitation vertikal im Wesentlichen länglich ausgebildet ist und quer, insbesondere im Wesentlichen horizontal, bewegt wird.

11. Verfahren nach Anspruch 9 oder 10, bei dem das Element (49) zur Kavitation einen V-förmigen Querschnitt aufweist.

12. Verfahren nach einem der vorigen Ansprüche, bei dem eine Schaumreduktionseinrichtung vorgesehen ist; und die Schaumreduktionseinrichtung eine Fläche (35) zum Begrenzen einer Ausdehnung des Materials aufweist, die zumindest eine Öffnung (37; 38) aufweist, durch welche die vergleichsweise niedrigsiedenden Stoffe treten.

13. Verfahren nach einem der vorigen Ansprüche, bei dem die Heizeinrichtung (33) zumindest einen elektrischen Widerstand (34) aufweist.

14. Verfahren nach einem der vorigen Ansprüche, bei dem der Reaktor (2) einen Mischer (26) aufweist, der während des Depolymerisationsschritts das Kunststoffmaterial in Bewegung hält; wobei das erste Heizelement (34; 34a) mit dem Mischer (26) kombiniert ist.

15. Verfahren nach einem der vorigen Ansprüche, bei dem die Heizeinrichtung (33) zumindest ein zweites Heizelement (34; 34b) aufweist, wobei das zweite Element fest angebracht ist.

## Revendications

1. Procédé de dépolymérisation thermocatalytique de matière plastique ; le procédé comprenant :
une étape pendant laquelle la matière plastique et un catalyseur pour la dépolymérisation sont placés dans un réacteur (2), qui comprend au moins un dispositif de chauffage (33) ;
une étape de dépolymérisation, pendant laquelle le dispositif de chauffage (33) fournit de la chaleur à la matière plastique et au moins une partie de la matière plastique est au moins partiellement dépolymérisée de manière à obtenir des composés à point d'ébullition relativement bas ; et
une étape de sortie, pendant laquelle au moins une partie des composés à point d'ébullition relativement bas quittent le réacteur (2) ;
le réacteur (2) comprend au moins une paroi externe (18 ; 19 ; 20) et une chambre de réaction (21), qui est au moins partiellement délimitée par la paroi externe (18 ; 19 ; 20) et à l'intérieur de laquelle, pendant l'étape de dépolymérisation, la matière plastique et le catalyseur sont placés ;
le procédé étant **caractérisé en ce que** le dispositif de chauffage (33) comprend au moins un premier élément chauffant (34 ; 34a) positionné à l'intérieur de la chambre de réaction (21) ; pendant l'étape de dépolymérisation, le premier élément chauffant (34 ; 34a) est maintenu en mouvement de manière à modifier sa position à l'intérieur de la chambre de réaction (21) ; le procédé comprenant en outre une étape de production d'électricité, qui fait suite à l'étape de sortie et pendant laquelle au moins une partie des composés à point d'ébullition relativement bas qui sont sortis du réacteur (2) sont brûlés pour la production d'électricité ; l'électricité produite est au moins partiellement utilisée par le dispositif de chauffage (33) pour chauffer la matière plastique.

2. Procédé selon la revendication 1, et comprenant une étape de séparation, pendant laquelle des gaz sensiblement non condensables sont séparés des composés à point d'ébullition sensiblement bas ; pendant l'étape de production d'électricité, les gaz sensiblement non condensables sont au moins partiellement brûlés.

3. Procédé selon la revendication 2 dans lequel, pendant l'étape de production d'électricité, un moteur à cycle Otto brûle les gaz sensiblement non condensables.

4. Procédé selon l'une des revendications précédentes, dans lequel, pendant l'étape de production d'électricité, un moteur diesel brûle les composés à point d'ébullition relativement bas.

5. Procédé selon l'une des revendications précédentes dans lequel, pendant l'étape de dépolymérisation, la matière plastique est maintenue au-dessous d'un niveau réglé (L), le premier élément chauffant (34 ; 34a) étant positionné au-dessous du niveau réglé (L) ; le dispositif de chauffage (33) comprend au moins un deuxième élément chauffant (34 ; 34b) positionné au-dessus du niveau réglé (L) de manière à chauffer les composés à point d'ébullition relativement bas positionnés au-dessus du niveau réglé (L).

6. Procédé selon la revendication 5, dans lequel le deuxième élément chauffant (34 ; 34b) a une deuxième surface chauffante (35) ; le réacteur (2) comporte un dispositif de nettoyage (42) qui comporte lui-même une deuxième racle (43) qui se couple avec la deuxième surface chauffante (35) ; pendant l'étape de dépolymérisation, la deuxième surface chauffante (35) et la deuxième racle (43) sont déplacées l'une par rapport à l'autre.

7. Procédé selon l'une des revendications précédentes, dans lequel le premier élément chauffant (34 ; 34a) a une première surface chauffante (35) ; le réacteur (2) comporte un dispositif de nettoyage (42) qui comporte lui-même une première racle (43) qui se couple avec la première surface chauffante (35) ; pendant l'étape de dépolymérisation, la première surface chauffante (35) et la première racle (43) sont déplacées l'une par rapport à l'autre.

8. Procédé selon la revendication 7, dans lequel le réacteur (2) comprend un arbre rotatif (27) qui est relié à la première racle (43) ou à la première surface chauffante (35) et fait tourner la première racle (43) ou la première surface chauffante (35) autour de son propre axe longitudinal (29).

9. Procédé selon l'une des revendications précédentes, et comprenant un dispositif de réduction de mousse (46) ; ledit dispositif de réduction de mousse (46) comprend au moins un élément (49) pour cavitation, qui est déplacé à l'intérieur de la matière plastique de manière à obtenir une cavitation favorisant l'agglomération et l'élimination des composés à point d'ébullition relativement bas.

10. Procédé selon la revendication 9, dans lequel l'élément (49) pour cavitation a un prolongement longitudinal sensiblement vertical et est déplacé en travers, en particulier de façon sensiblement horizontale.

11. Procédé selon la revendication 9 ou 10, dans lequel l'élément (49) pour cavitation a une section transversale en forme de V.

12. Procédé selon l'une des revendications précédentes, et comprenant un dispositif de réduction de mousse ; le dispositif de réduction de mousse comprend une surface (35) destinée à limiter l'expansion de la matière, qui a au moins une ouverture (37 ; 38) à travers laquelle passent les composés à point d'ébullition relativement bas.

13. Procédé selon l'une des revendications précédentes, dans lequel le dispositif de chauffage (33) comprend au moins une résistance électrique (34).

14. Procédé selon l'une des revendications précédentes, dans lequel le réacteur (2) comprend un mélangeur (26) qui, pendant l'étape de dépolymérisation, maintient la matière plastique sous agitation ; le premier élément chauffant (34 ; 34a) est combiné avec le mélangeur (26).

15. Procédé selon l'une des revendications précédentes, dans lequel le dispositif de chauffage (33) comprend au moins un deuxième élément chauffant (34 ; 34b), le deuxième élément étant fixe.
